Europäisches Patentamt

(19) European Patent Office  (11) Numéro de publication: **0 123 339**

Office européen des brevets  **B1**

(12) **FASCICULE DE BREVET EUROPÉEN**

(45) Date de publication du fascicule du brevet:
16.12.87

(21) Numéro de dépôt: **84200454.1**

(22) Date de dépôt: **29.03.84**

(51) Int. Cl.⁴: **F 23 C 3/00,** F 24 H 1/10,
F 24 H 3/04

(54) **Appareil de chauffage.**

(30) Priorité: **15.04.83 BE 210569**

(43) Date de publication de la demande:
**31.10.84 Bulletin 84/44**

(45) Mention de la délivrance du brevet:
**16.12.87 Bulletin 87/51**

(84) Etats contractants désignés:
**AT CH DE FR GB IT LI LU NL SE**

(56) Documents cité:
**DE-A-2 950 774**
**FR-A-2 468 850**
**GB-A-886 268**
**GB-A-1 211 991**

**GAZ D'AUJOURD'HUI, vol. 92, novembre 1968,**
**pages 435-441, Paris, FR; P. HOSTALIER: "De la**
**combustion submergée aux générateurs à**
**condensation"**

(73) Titulaire: **Bougard, Jacques Léopold, le Beaulieu**
**44, B-6140 Fontaine- l'Evêque (BE)**

(72) Inventeur: **Bougard, Jacques Léopold, le Beaulieu**
**44, B-6140 Fontaine- l'Evêque (BE)**

(74) Mandataire: **Schmitz, Yvon, Bureau Gevers S.A. 7,**
**rue de Livourne Bte 1, B-1050 Bruxelles (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative à un appareil de chauffage comprenant une enceinte comportant un brûleur et une chambre de combustion verticale comprenant au moins une ouverture située à la partie inférieure de celle-ci permettant la sortie des gaz de combustion, le brûleur comprenant un conduit d'alimentation en comburant gazeux et un conduit d'alimentation en combustible coaxial et de section inférieure à ce dernier, menant à la chambre de combustion, des moyens d'allumage du mélange de combustible et de comburant gazeux, des moyens agencés pour provoquer un mouvement torique au mélange du comburant gazeux et du combustible a l'intérieur de la chambre de combustion, des moyens permettant de réaliser le mélange d'un fluide primaire avec les gaz de combustion quittant la chambre de combustible par l'ouverture, ainsi que des moyens pour contenir un fluide secondaire et pour permettre, après le mélange du fluide primaire avec les gaz de combustion, un échange de chaleur entre ce fluide primaire et le fluide secondaire à chauffer, l'enceinte étant agencée autour de la chambre de combustion pour contenir au moins une partie importante du fluide primaire.

Pour réduire les surfaces d'échange très importantes qui sont exigées dans les appareils de chauffage classiques, on a imaginé divers appareils de chauffage direct d'eau qui permettent, pour une même puissance calorifique du brûleur, de réduire de manière sensible l'importance des surfaces d'échange précitées. Toutefois, les chambres de combustion, partiellement refroidies par l'écoulement d'un film d'eau intérieur ou extérieur, présentent donc des parois soumises à de très hautes températures, qui sont impossibles à refroidir d'une manière efficace, entraînant ainsi l'apparition de déformations, de corrosions, d'incrustations, de fissurations et finalement de ruptures de ces parois. Il en résulte des frais d'entretien importants et une durée de vie relativement courte des appareils de chauffage, même si l'on utilise des matériaux nobles pour leur construction.

A cet égard, l'article de P. Hostalier "De la combustion submergée aux générateurs à condensation", paru dans Gaz d'Aujourd'hui, vol. 92, novembre 1968, pages 435-441, Paris, FR, ainsi que le brevet FR-A-2.468.850 et le brevet GB-A-1.211.991 concernent des appareils de chauffage d'eau par combustion submergée comportant un brûleur, alimenté en un seul prémélange partiel air comburant-gaz combustible dans le cas de l'article d'Hostalier et en deux prémélanges totaux air comburant-gaz combustible dans le cas des brevets FR-A-2.468.850 et GB-A-1.211.991, une chambre de combustion verticale, partiellement immergée dans un bain d'eau et dont les parois travaillent à hautes températures, en acier réfractaire dans le cas de l'article d'Hostalier ou en béton réfractaire dans le cas des brevets FR et GB, et finalement des tuyères d'injection des gaz de combustion sous forme de bulles dans un bain d'eau. Ces appareils de chauffage, utilisant le principe de la combustion submergée, où le brûleur, prolongé par une chambre de combustion ouverte, dégage ses produits de combustion dans le liquide même qu'ils traversent en remontant vers la surface sous forme de bulles, ne permettent que l'utilisation d'échangeurs internes tubulaires immergés en courants croisés, dont les coefficients d'échange sont nettement inférieurs aux échangeurs en contrecourants. Il est en effet impossible en courants croisés de refroidir les gaz de combustion à des températures aussi basses qu'en contrecourants. Ces appareils de chauffage présentent de plus l'inconvenient de nécessiter des surpresseurs d'air comburant avec des pressions différentielles de l'ordre de 250 mbar, de façon à assurer l'injection des gaz de combustion sous forme de bulles dans le bain primaire, supresseurs d'air qui entraînent en outre d'importants frais d'isolation phonique.

L'invention a pour but de remédier aux inconvénients des appareils de chauffage connus et de procurer un appareil de chauffage de fluide développant de fortes puissances calorifiques dans un volume réduit, présentant des rendements thermiques, calculés sur le pouvoir calorifique inférieur du combustible, dépassant largement 100 %, et assurant en même temps l'épuration des produits de combustion avant leur rejet dans l'atmosphère, cet appareil se révélant extrêmement simple et peu coûteux à la construction, en fonctionnement et à l'entretien. L'appareil de l'invention se révèle également particulièrement avantageux pour la production centralisée d'eau chaude dans les industries agro-alimentaires, pour le chauffage des bâtiments à basses températures par le sol, par radiateurs, convecteurs ou batteries, pour la vaporisation de gaz liquéfiés, tels que gaz naturels, propane, butane, oxygène et azote.

A cet effet, selon l'invention, l'appareil comprend une tête d'injection montée sur le conduit d'alimentation en combustible pourvue de tuyères orientées pour diriger le combustible dans la chambre de combustion suivant des angles par rapport à l'axe du conduit d'alimentation en combustible se situant entre 15 et 90°, les moyens agencés pour provoquer un mouvement torique au mélange comburant gazeux - combustible comprenant une hélice fixe montée sur le conduit d'alimentation en combustible à l'intérieur du conduit d'alimentation en comburant gazeux précité, tadite hélice étant disposée à proximité de la tête d'injection précitée et à un niveau légèrement supérieur à celui de celle-ci de manière à obtenir une température sensiblement uniforme dans la totalité de la chambre de combustion, les moyens permettant de réaliser le mélange d'un fluide primaire avec les gaz de combustion quittant la chambre de combustion par l'ouverture inférieure comprenant des organes d'injection pour pulvériser ledit fluide primaire dans les gaz de combustion afin de réaliser ledit mélange, ces organes d'injection étant agencés à l'intérieur de l'enceinte susdite et situés au-dessus et à l'extérieur de la chambre de combustion de manière à permettre un échange de chaleur entre les gaz de combustion sortant de la chambre montant dans l'enceinte et le fluide primaire pulvérisé descendant dans l'enceinte sur au moins une longueur importante de la chambre, et à permettre un refroidissement efficace des parois de la chambre de combustion, l'enceinte agencée pour recueillir le fluide primaire pulvérisé comprenant un orifice de sortie dudit fluide primaire ainsi qu'un déversoir maintenant le fluide primaire de l'enceinte à un niveau constant dans la partie inférieure de celle-ci, à une certaine distance en-dessous de l'ouverture inférieure de la chambre de combustion.

Suivant un mode de réalisation de l'invention la chambre de combustion est de forme cylindrique, son diamètre étant de 1,6 à 6 fois supérieur au diamètre du conduit d'alimentation en comburant gazeux, la partie supérieure de ladite chambre ayant la forme d'un tronc de c*one.

Suivant un mode de réalisation avantageux de l'invention, le fluide est un liquide et les organes d'injection comprennent au moins quatre pulvérisateurs disposés autour du conduit d'alimentation en comburant gazeux, ces pulvérisateurs étant chacun agencés pour projeter le liquide sur le brûleur, la chambre de combustion et dans les gaz de combustion montant dans l'enceinte suivant un c*one dont l'axe est sensiblement parallèle à l'axe longitudinal de la chambre de combustion.

Suivant un mode de réalisation particulièrement avantageux de l'invention, des moyens sont prévus dans la chambre de combustion, d'une part, pour favoriser l'échange de chaleur entre les gaz de combustion et les parois de ladite chambre et, d'autre part, pour retenir au moins une partie importante des matières résiduaires fondues provenant de la combustion, ces moyens étant de préférence constitués par des ailettes réparties régulièrement sur la périphérie intérieure de la chambre, disposées sensiblement perpendiculairement à l'axe longitudinal de ladite chambre.

Suivant une forme de réalisation avantageuse de l'invention, l'àppareil de chauffage comprend des moyens pour contr*oler la température des parois de la chambre de combustion, ces moyens étant constitués par une enveloppe aménagée latéralement autour de la chambre de combustion, dans laquelle circule un fluide de refroidissement, cette enveloppe ayant, sur au moins une partie importante de la périphérie de la chambre de combustion, une paroi commune avec cette dernière.

L'appareil présente également l'avantage par rapport aux dispositifs antérieurs de pouvoir être utilisé non seulement avec des combustibles gazeux, comme les gaz naturels et les gaz manufacturés, mais également avec des combustibles liquides, comme les huiles légères, les huiles résiduaires ou les lessives de papeteries, avec des combustibles solides pulvérisés et séchés comme les bois, les charbons gras ou flambants, les lignites ou les tourbes, et également avec des combustibles solides finement pulvérisés et mélangés à des liquides, tels que les mélanges charbon gras-eau-huile ou charbon flambant-eau, tous ces combustibles se révélant nettement moins chers que les gaz naturels. Comme on vient de le préciser, l'appareil de l'invention permet également d'épurer les produits de combustion, avant leur rejet à l'atmosphère, et d'abaisser notamment les teneurs en cendres volantes et en anhydride sulfureux en-dessous des limites fixées par les diverses réglementations locales ou nationales. L'appareil de l'invention présente également l'avantage par rapport aux appareils connus du même type de pouvoir être utilisé non seulement en produits de combustion complète mais également en produits de combustion partielle, c'est-à-dire sous forme de gazogène où l'on pourrait récupérer la chaleur sensible des produits de combustion.

D'autres détails et particularités de l'invention ressortiront de la description des dessins annexés au présent mémoire, qui représentent, à titre d'exemples non limitatifs, des formes particulières de l'objet de l'invention.

La figure 1 est une figure schématique, en élévation et en coupe, montrant une forme de réalisation d'un appareil de chauffage suivant l'invention.

La figure 2 est une vue analogue à la figure 1, montrant une variante de l'appareil de chauffage montré à la figure 1.

Dans les figures, les mêmes notations de référence désignent des éléments identiques ou analogues.

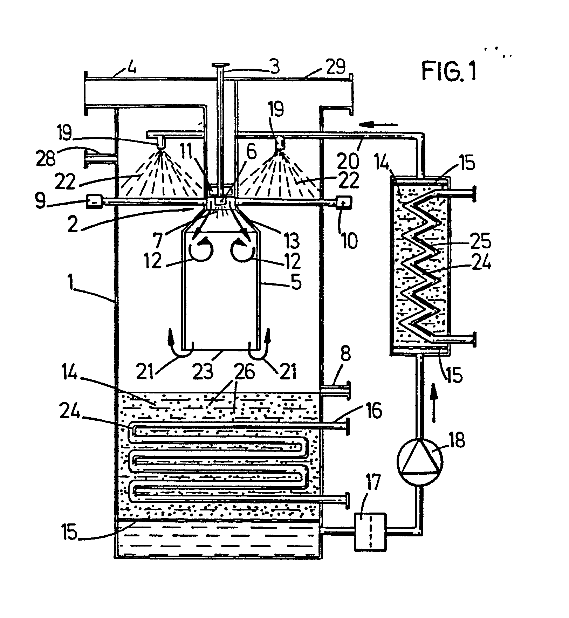

L'appareil de chauffage suivant l'invention, montré à la figure 1, est destiné à chauffer un fluide et comprend une enceinte 1, un brûleur 2 alimenté par un conduit 3 en combustible gazeux sous pression ou en combustible liquide ou solide ou encore mélange liquide-solide sous forme de fines particules en suspension dans un courant rapide de comburant gazeux dit primaire, insuffisant pour atteindre les limites d'inflammation, et alimenté par un conduit 4 en comburant gazeux dit secondaire, suffisant pour assurer la combustion complète, ainsi qu'une chambre de combustion 5 disposée coaxialement a l'intérieur de l'enceinte 1.

Le conduit d'alimentation 3 en combustible, de section inférieure au conduit d'alimentation 4 en comburant et disposé coaxialement à l'intérieur de celui-ci, comporte une tête d'injection 6 pourvue de tuyères 7 orientées, dont la direction par rapport à l'axe des conduits 3 et 4 varie d'un angle compris entre 15 et 90°. Le brûleur 2 comprend en outre deux tubulures horizontales disposées à hauteur de la tête d'injection 6, dans des positions diamétralement opposées sur la conduite 4, le premier servant au passage d'une bougie d'allumage à haute tension ou d'un brûleur pilote d'allumage intermittent 9, conformément aux diverses réglementations nationales, et le second pour l'agencement d'une cellule photoélectrique 10 permettant de contr*oler les flammes produites par le brûleur 2. Une hélice fixe 11 est montée sur le conduit d'alimentation 3 en combustible à proximité de la tête d'injection 6 et légèrement au-dessus de celle-ci. Cette hélice 11 est agencée pour provoquer un mouvement torique 12 au mélange comburant gazeux - combustible à l'interieur de la chambre de combustion 5 de manière à obtenir une température sensiblement uniforme dans la totalité de la chambre de combustion. Cette hélice 11 permet non seulement d'éviter des différences de températures élevées à l'intérieur de la chambre de combustion, et de provoquer par conséquent une détérioration rapide de celle-ci mais également d'obtenir une combustion plus complète qu'avec les appareils du même type connus jusqu'à présent, le mélange comburant-combustible se faisant d'une manière nettement plus efficace que dans les appareils connus précités. Cette hélice 11 est en fait agencée pour provoquer la mise en rotation rapide du comburant gazeux et du combustible alimentant la chambre de combustion 5, de manière à entretenir dans la partie supérieure de cette dernière des courants toriques de recyclage à grandes vitesses, à réaliser une combustion rapide et complète dans un volume très réduit et à obtenir une température sensiblement uniforme dans la totalité de la chambre de combustion.

L'apparition de ces courants toriques est facilitée par la forme particulière de la chambre de combustion dont la partie supérieure a la forme d'un tronc de c*one 13 dont l'angle au sommet varie de 30° à 90°. Le diamètre de la chambre de combustion, de forme cylindrique et agencée coaxialement à l'intérieur de l'enceinte 1, est de 1,6 à 6 fois supérieur a diamètre de la conduite d'alimentation 4 en comburant gazeux.

La partie inférieure de l'enceinte 1 contient un bain de liquide 14, dénommé par la suite "liquide primaire", constituant le liquide de transmission calorifique qui est le plus souvent constitué par une solution dont le niveau maximal est fixé par le déversoir 8, et dans lequel est immergé éventuellement un échangeur de chaleur 16. Le liquide primaire 14 est aspiré dans le bas de l'enceinte 1 à travers un filtre automatique 17 pourvu d'un orifice de vidange périodique, destiné à séparer les cendres volantes éventuellement formées par la combustion, puis refoulé sous forte pression par une pompe 18 vers des pulvérisateurs 19 montés sur une conduite d'alimentation 20 dans la partie supérieure de l'enceinte, au-dessus et à l'extérieur de l'ensemble brûleur-chambre de combustion. Ces pulvérisateurs 19 au nombre minimal de quatre, dont seulement deux sont représentés, sont disposés autour du conduit d'alimentation 4 en comburant gazeux et agencés vers le bas pour projeter le liquide primaire 14 sur l'ensemble brûleur-chambre de combustion 2,5 et dans les gaz de combustion 21 sortant de la chambre et montant dans l'enceinte, suivant un c*one 22 dont l'axe est parallèle à l'axe longitudinal de la chambre de combustion. Au cours de sa descente, le liquide primaire pulvérisé est réchauffé d'une part au contact des parois extérieures de la chambre de combustion 5 et, d'autre part, au contact direct en contre-courant des gaz de combustion sortant par l'ouverture 23 et montant dans l'enceinte. Le liquide primaire réchauffé tombe ensuite dans la partie inférieure de l'enceinte 1 et cède sa chaleur à un fluide 24 quelconque, dénommé par la suite "fluide secondaire", tel que gaz, vapeur, gaz liquéfié à vaporiser, liquide ou solide pulvérisé ou en grains, circulant à contre-courant dans le serpentin échangeur de chaleur 16 ou dans un serpentin échangeur de chaleur 25 situé à l'extérieur de l'enceinte 1, totalement immergé dans le liquide primaire 14, pour être ensuite recyclé vers les pulvérisateurs 19 situés à la partie supérieure de l'enceinte. Comme on peut le voir sur la figure 1, les pulvérisateurs 19 sont disposés dans l'enceinte de manière à ce que le liquide primaire pulvérisé puisse se mélanger aux gaz de combustion sur la totalité de la longueur de la chambre de combustion et de manière à ce que les parois de la chambre soient parfaitement refroidies sur la totalité de leur superficie, ce qui permet d'éviter l'apparition de zones mal refroidies, donc nettement plus chaudes et plus sensibles à une déformation ou à une détérioration.

Suivant l'invention, tous les types d'échangeurs de chaleur peuvent être utilisés; à savoir tubes lisses, tubes à ailettes, plaques, etc., mais le liquide primaire dans lequel sont immergés ces échangeurs comportera de préférence des particules de matière solide 26 d'un poids spécifique inférieur ou supérieur à celui du liquide primaire 14 suivant le sens de circulation de ce dernier, c'est-à-dire suivant qu'il s'agisse d'une circulation descendante ou ascendante, par exemple des granulés en matière plastique, des grains de sable, des billes de porcelaine ou de verre, maintenues en suspension ou fluidisation stable dans le courant de liquide primaire entourant l'échangeur de chaleur parcouru par le fluide secondaire. Les légers chocs et frottements des particules 26 sur les parois de l'échangeur de chaleur évitent les dép*ots d'impuretés, maintiennent les surfaces d'echange parfaitement polies et propres, augmentent sensiblement les coefficient d'échange thermique entre le bain primaire et les surfaces propres, tout en ne provoquant qu'une érosion métallique négligeable. Des grilles 15 retiennent les particules 26 dans la zone d'échange de chaleur.

On a constaté que le coefficient d'échange thermique entre un courant d'eau sans particules en suspension et une paroi métallique était de 450 W x m-2 x °C-1, alors qu'il atteint 3410 W x m-2 x °C-1 pour le même courant d'eau avec des particules de fluidisation. L'utilisation de ces particules s'avère particulièrement intéressante pour la vaporisation de gaz liquéfiés s'écoulant à travers des tubes échangeurs de chaleur. Dans un echangeur classique à bain ou ruissellement d'eau, il est très difficile d'eviter la formation de glace sur les tubes dont la température descend dans certaines zones jusqu'à -170°C. Il en résulte donc une très mauvaise transmission de la chaleur et une diminution de l'efficacité. Au contraire, dans l'appareil suivant la présente invention, l'agitation par fluidisation empêche le gel, ce qui combiné aux coefficients élevés d'échange thermique rend l'appareil très avantageux pour cet usage.

Le rendement thermique de l'opération de chauffage est fonction de la nature des combustible et comburant, de l'excès ou défaut de comburant par rapport à la quantité stoechiométrique, de la température de sortie des produits de combustion qui est très voisine des températures d'entrée du liquide primaire dans l'enceinte ou du fluide secondaire dans l'échangeur, et finalement de la pression des produits de combustion dans l'enceinte. Pour un combustible et un excès de comburant donnés, le rendement thermique augmente quand à la température de sortie des produits de combustion diminue ou quand la pression de ces produits augmente.

Les applications les plus intéressantes de l'appareil de l'invention sont celles où la température d'entrée du fluide secondaire dans l'échangeur est inférieure à environ 50°C, de façon à obtenir sous la pression atmosphérique, une température de sortie des produits de combustion inférieure par exemple à 58°C pour du gaz naturel à base de méthane, brûlé avec un excès d'air de 12%, ou bien à 56°C pour du bois pulvérisé à 15% d'eau, brûlé avec un excès d'air de 12%. Dans ce cas, la quantité de vapeur d'eau provenant de la combustion qui est en excédent par rapport à la quantité correspondant à la saturation, se condense dans le bain aqueux primaire. Il y a donc transfert de matière dans le sens produits de combustion-bain, et l'excédent de volume de bain primaire correspondant à cette production d'eau condensée sera évacué à l'égout par débordement par le déversoir 8. Le transfert de chaleur fait intervenir la chaleur latente de vaporisation de l'eau et on récupère donc la chaleur correspondant à l'excédent de vapeur d'eau qui se condense. De ce fait, les rendements de combustion et par conséquent de chauffage calculés sur le pouvoir calorifique inférieur du combustible, puisque les pertes de l'appareil par rayonnement et convection sont négligeables, dépassent 100%, ce qui correspond à plus de 90% sur le pouvoir calorifique supérieur du combustible.

On donne ci-après, à titre d'exemple, les conditions de fonctionnement d'un réchauffeur d'eau de ville de l'invention destiné à la production centralisée d'eau chaude dans un abattoir, en remplacement d'une chaudière classique à vapeur:.

- Puissance calorifique nominale à l'entrée sur pouvoir calorifique supérieur: 1163 kW = 1000 Mcal/h
- Pouvoir calorifique supérieur du gaz naturel: 15,456 kWhS/kg
- Débit de gaz naturel: 75,25 kg/h
- Excès d'air: 10%
- Débit d'azote dans l'air comburant: 1094,7 kg/h
- Débit d'oxygène dans l'air comburant: 330,4 kg/h
- Température de l'air comburant et du gaz naturel: 15°C
- Pression de l'air comburant à l'entrée du brûleur: 1050 mbar
- Teneur en vapeur d'eau de l'air sec: 5 gr/kg air sec
- Débit de vapeur d'eau dans l'air comburant: 7,1 kg/h
- Débit d'eau secondaire réchauffée: 24.938 kg/h
- Température d'eau secondaire entrée échangeur: 10,5°C
- Température d'eau secondaire sortie échangeur: 50,2°C
- Différence de température d'eau secondaire: 39,7°C
- Puissance calorifique nominale à la sortie : 990 Mcal/h = 1151 kW
- Rendement thermique nominal sur pouvoir calorifique supérieur: 99,0%
- Température de sortie des produits de combustion: 24,0°C
- Débit d'azote dans les produits de combustion: 1094,7 kg/h
- Débit d'anhydride carbonique dans les produits de combustion : 206,6 kg/h
- Débit d'oxygène dans les produits de combustion: 30,0 kg/h
- Débit de vapeur d'eau dans les produits de combustion : 25,3 kg/h
- Nature de l'eau primaire: eau de ville sans addition
- Débit d'eau condensée vers égout: 143,8 kg/h
- Débit d'eau primaire dans la pompe: environ 25.000 kg/h
- Température d'eau primaire entrée echangeur: 62,0°C
- Température d'eau primaire sortie échangeur: 22,3°C

Le rendement thermique sur pouvoir calorifique inférieur du gaz naturel est passé de 65% en chaudière classique à 109,9% avec l'appareil suivant l'invention et l'investissement sera amorti en moins d'un an par l'économie réalisée sur la consommation de combustible.

Dans d'autres applications de l'appareil de l'invention, par exemple le chauffage classique de bâtiments par radiateurs avec modulation de la température de départ en fonction de la température extérieure, la température d'entree de l'eau secondaire dans l'échangeur pourrait dépasser 50°C et atteindre 65°C pendant la saison froide. Pour conserver un rendement thermique supérieur à 100% sur pouvoir calorifique inférieur avec des gaz combustibles propres, un premier procédé consiste à augmenter la pression des produits de combustion dans l'enceinte en montant un surpresseur de comburant et de combustible à l'entrée et une turbine de récupération à la sortie. Un second procédé consiste à remplacer l'eau primaire par une solution aqueuse de composés minéraux ou organiques, par exemple du carbonate de potassium, ne subissant ni décomposition, ni polymérisation ni altération quelconque de ses propriétés au contact des produits de combustion à hautes températures, présentant une faible viscosité dans la plage des températures d'utilisation et un point d'ébullition sous pression atmosphérique dépassant largement 100°C. Dans ce cas, jusqu'à une température de l'ordre de 75°C sous la pression atmosphérique, la quantité de vapeur d'eau provenant de la combustion qui est en excédent par rapport à la quantité correspondant à la saturation, se condense dans le bain primaire et en provoque la dilution. Le volume du bain primaire peut être maintenu constant par séparation de l'eau condensée à l'aide d'un procédé connu, par exemple l'osmose inverse, avec une dépense d'énergie relativement simple.

Ainsi qu'on l'a déjà précisé précédemment, l'appareil de l'invention permet également d'épurer les produits de combustion, avant leur rejet à l'atmosphère. Cet objectif est atteint sans appareillage spécial tel que dépoussiéreur ou laveur, et par simple addition à la solution aqueuse primaire de substances capables de fixer des matières nocives, telles que le soufre et les cendres volantes, par exemple des produits neutralisants, tels que carbonate de sodium, carbonate de potassium, soude caustique ou potasse caustique. Plus de 90% des sulfites et sulfates formés par les réactions passent en solution dans le bain primaire et sont évacués à l'égout avec l'eau condensée. Ces produits neutralisants peuvent être ajoutés au liquide primaire, par la conduite 28. Les gaz de combustion refroidis et épurés sont ensuite évacués à l'atmosphère par la conduite 29.

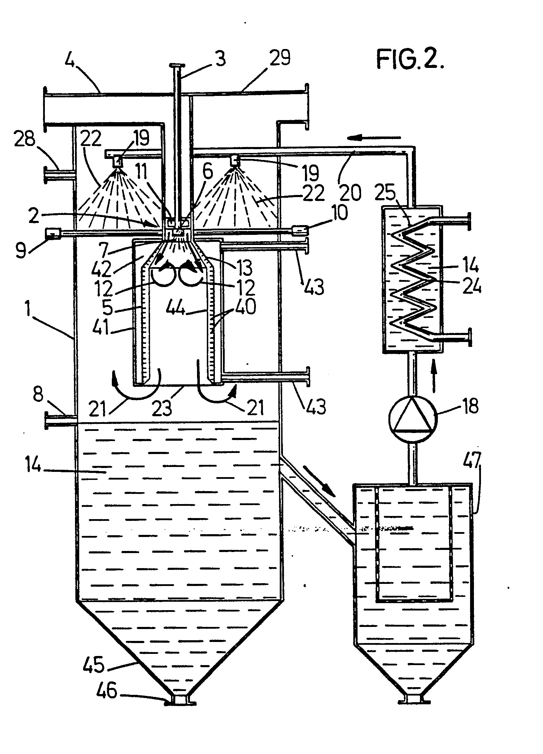

L'appareil de chauffage suivant l'invention, représenté par la figure 2, se différencie essentiellement de l'appareil de chauffage de la figure 1, par la configuration structurale de sa chambre de combustion 5. En effet, la chambre de combustion de l'appareil de chauffage de la figure 2 est pourvue d'ailettes 40 réparties régulièrement sur sa périphérie intérieure. Ces ailettes 40, disposées perpendiculairement à l'axe longitudinal de la chambre, favorisent en fait l'échange de chaleur entre les gaz de combustion et les parois de la chambre de combustion 5 et retiennent une partie importante des cendres fondues provenant de la combustion. Une enveloppe cylindrique, coaxiale 41 aménagée latéralement autour de la chambre de combustion et contre cette dernière, dans laquelle circule un fluide de refroidissement 42, sert à contrôler la température des parois latérales de la chambre de combustion, des tubulures inférieure et supérieure 43 permettant la circulation du fluide 42 dans l'enveloppe 41.

La mise en rotation rapide du mélange comburant-combustible par l'hélice 11 du brûleur 2 crée dans la partie supérieure de la chambre de combustion 5 des courants toriques 12 de recyclage à grandes vitesses, comme dans le cas de l'appareil de la figure 1, pour réaliser une combustion rapide et complète dans un volume réduit. La plus grande partie (environ 90%) des cendres fondues produites par les combustibles solides brûlés est projetée, sous l'action des courants aérodynamiques, sur les parois intérieures de la chambre de combustion, qui forment d'abord une couche solidifiée, isolante et fragile 44, retenue par les ailettes 40, ensuite une couche intermédiaire visqueuse et plastique et finalement un film nettement liquide qui s'écoule vers le bas sous l'action combinée des courants aérodynamiques et de la gravité, l'épaisseur totale de ces trois couches étant de l'ordre de 20 mm. Les reste des cendres (environ 10%) est entraîné par les gaz de combustion. Le contrôle du flux thermique et de la température des parois de la chambre de combustion est essentiel pour éviter la formation de rides, anneaux ou autres irrégularités superficielles sur la chambre de combustion, qui abaissent la qualité de la combustion et augmente l'entraînement de cendres. Comme dans le cas de l'appareil de la figure 1, l'enceinte 1 contient, dans sa partie inférieure, un bain de liquide primaire 14, qui est de préférence constitué par une solution aqueuse dont le niveau maximal est fixé par le déversoir 8. Les cendres fondues tombent dans ce bain où elles subissent une trempe et une fragmentation en grains d'une dimension de quelques millimètres, ces grains se dirigeant ensuite vers le fond conique 45 de l'enceinte et s'y déposant. Les grains sont ensuite enlevés par l'orifice de vidange périodique 46. Le liquide primaire est aspiré dans le bas de l'enceinte dans un séparateur de cendres fines d'une manière connue en soi, par exemple un décanteur rapide à plaques inclinées ou filtre automatique avec orifice de vidange périodique 47, et refoulé sous forte pression par la pompe 18 à travers l'échangeur de chaleur à contre-courant 25, vers les pulvérisateurs 19 montés dans la partie supérieure de l'enceinte, au-dessus de la chambre de combustion 5. Le liquide primaire 14 pulvérisé vers le bas dans l'enceinte est réchauffé lors de sa descente, d'une part, au contact des parois extérieures de la chambre de combustion et, d'autre part, au contact direct en contre-courant des gaz de combustion 21 sortant de la chambre de combustion par l'ouverture 23 et montant dans l'enceinte. Le liquide primaire cède ensuite sa chaleur à un fluide secondaire quelconque circulant dans le serpentin échangeur de chaleur 25 et circulant à contre-courant. Comme dans le cas de l'appareil de la figure 1, pour neutraliser les anhydrides sulfureux et sulfuriques des produits de combustion, on ajoutera au liquide primaire par la conduite 28 un des produits neutralisants cités précédemment. Les gaz de combustion refroidis et épurés sont évacués vers l'atmosphère par la tubulure 29.

On pourrait concevoir, bien entendu, des appareils de chauffage comportant plusieurs brûleurs et chambres de combustion correspondantes et une série de pulvérisateurs agencés au-dessus de ces dernières en un ou plusieurs niveaux et suivant des directions quelconques par rapport aux axes des chambres. D'autre part, le fluide secondaire à chauffer, tout comme le fluide primaire, qu'il soit un liquide ou un gaz, circule de préférence également sous pression et en circuit fermé.

## Revendications

1. Appareil de chauffage comprenant une enceinte (1) comportant un brûleur (2) et une chambre de combustion verticale (5) comprenant au moins une ouverture (23) située à la partie inférieure de celle-ci permettant la sortie des gaz de combustion (21), le brûleur (2) comprenant un conduit d'alimentation (4) en comburant gazeux et un conduit d'alimentation (3) en combustible coaxial et de section inférieure à ce dernier, menant à la chambre de combustion (5), des moyens d'allumage du mélange de combustible et de comburant gazeux, des moyens agencés pour provoquer un mouvement torique au mélange du comburant gazeux et du combustible à l'intérieur de la chambre de combustion (5), des moyens (19) permettant de réaliser le mélange d'un fluide primaire avec les gaz de combustion (21) quittant la chambre de combustible par l'ouverture (23), ainsi que des moyens (16) pour contenir un fluide secondaire et pour permettre, après le mélange du fluide primaire avec les gaz de combustion, un échange de chaleur entre ledit fluide primaire et ledit fluide secondaire à chauffer, ladite enceinte (1) étant agencée autour de la chambre de combustion (5) pour contenir au moins une partie importante du fluide primaire, caractérisé en ce que ledit appareil comprend une tête d'injection (6) montée sur le conduit d'alimentation (3) en combustible pourvue de tuyères (7) orientées pour diriger le combustible dans la chambre de combustion (5) suivant des angles par rapport à l'axe du conduit d'alimentation (3) en combustible se situant entre 15 et 90°, en ce que les moyens agencés pour provoquer un mouvement torique au mélange comburant gazeux - combustible comprennent une hélice fixe (11) montée sur le conduit d'alimentation (3) en combustible à l'intérieur du conduit d'alimentation (4) en comburant gazeux précité, ladite hélice (11) étant disposée à proximité de la tête d'injection (6) précitée et à un niveau légèrement supérieur à celui de celle-ci de manière à obtenir une température sensiblement uniforme dans la totalité de la chambre de combustion (5) et en ce que les moyens (19) permettant de réaliser le mélange d'un fluide primaire avec les gaz de combustion (21) quittant la chambre de combustion (5) par l'ouverture inférieure (23) comprennent des organes d'injection pour pulvériser ledit fluide primaire dans les gaz de combustion (21) afin de réaliser ledit mélange, ces organes d'injection étant agencés à l'intérieur de l'enceinte (1) susdite et situés au-dessus et à l'extérieur de la chambre de combustion (5) de manière à permettre un échange de chaleur entre les gaz de combustion (21) sortant de la chambre montant dans l'enceinte (1) et le fluide primaire pulvérisé descendant dans l'enceinte (1) sur au moins une longueur importante de la chambre, et à permettre un refroidissement efficace des parois de la chambre de combustion (5), l'enceinte (1) agencée pour recueillir le fluide primaire pulvérisé comprenant un orifice de sortie (17) dudit fluide primaire ainsi qu'un déversoir (8) maintenant le fluide primaire de l'enceinte (1) à un niveau constant dans la partie inférieure de celle-ci, à une certaine distance en-dessous de l'ouverture (23) de la chambre de combustion (5).

2. Appareil de chauffage suivant la revendication 1, caractérisé en ce que la chambre de combustion (5) est de forme cylindrique, son diamètre etant de 1,6 à 6 fois supérieur au diamètre du conduit d'alimentation (4) en comburant gazeux, la partie supérieure de ladite chambre de combustion (5) ayant la forme d'un tronc de c*one.

3. Appareil de chauffage suivant l'une ou l'autre des revendications 1 et 2, caractérisé en ce que le brûleur (2) comprend des moyens de contr*ole (10) des flammes sortant dudit brûleur, ces moyens étant disposés à hauteur de la tête d'injection (6) en fluide combustible précitée.

4. Appareil de chauffage suivant l'une quelconque des revendications 1 à 3, caractérisé en ce que le fluide primaire est un liquide (14).

5. Appareil de chauffage suivant la revendication 4, caractérisé en ce que les organes d'injection comprennent au moins quatre pulvérisateurs (19) disposés autour du conduit d'alimentation (4) en comburant gazeux, ces pulvérisateurs (19) étant chacun agencés pour projeter le liquide (14) sur le brûleur (2), la chambre de combustion (5) et dans les gaz de combustion (21) montant dans l'enceinte (1) suivant un c*one (22) dont l'axe est sensiblement parallèle à l'axe longitudinal de la chambre de combustion.

6. Appareil de chauffage suivant l'une ou l'autre des revendications 4 et 5, caractérisé en ce que les moyens précités pour contenir le fluide secondaire et permettre un échange de chaleur entre ledit liquide (14) et ledit fluide secondaire à chauffer sont constitués par un serpentin (16) agencé de manière à être totalement immergé dans le liquide (14) contenu dans la partie inférieure de l'enceinte, le fluide secondaire (24) dans le serpentin (16) circulant à contre-courant dudit liquide (14).

7. Appareil de chauffage suivant l'une ou l'autre des revendications 4 et 5, caractérisé en ce qu'il comprend une chambre extérieure à l'enceinte (1) agencée pour contenir une partie du liquide précité, communiquant avec la partie inférieure de l'enceinte, et en ce que les moyens précités pour contenir le fluide secondaire et permettre un échange de chaleur entre ledit liquide (14) et ledit fluide secondaire à chauffer sont constitués par un serpentin (25) agencé de manière à être totalement immergé dans le liquide (14) dans la chambre extérieure, le fluide secondaire (24) dans le serpentin (25) circulant à contre-courant dudit liquide (14).

8. Appareil de chauffage suivant l'une quelconque des revendications 4 à 7, caractérisé en ce qu'il comporte des moyens (17) pour séparer les matières solides résiduaires provenant de la combustion, du liquide (14) contenu dans la partie inférieure de l'enceinte (1), ces moyens étant situés à l'extérieur de celle-ci et en aval de l'orifice de sortie dudit liquide.

9. Appareil de chauffage suivant la revendication 8, caractérisé en ce que le fond de l'enceinte (1) est de forme conique pour faciliter le dép*ot des matières solides résiduaires les plus volumineuses.

10. Appareil de chauffage suivant l'une quelconque des revendications 4 à 9, caractérisé en ce que des moyens (40) sont prévus dans la chambre de combustion (5), d'une part, pour favoriser l'échange de chaleur entre les gaz de combustion (21) et les parois de ladite chambre et, d'autre part, pour retenir au moins une partie importante des matières résiduaires fondues provenant de la combustion.

11. Appareil de chauffage suivant la revendication 10, caractérisé en ce que les moyens prévus pour favoriser l'échange de chaleur entre les gaz de combustion (21) et les parois de ladite chambre (5) et pour retenir au moins une partie importante des matières résiduaires fondues provenant de la combustion sont constitués par des ailettes (40) réparties régulièrement sur la périphérie intérieure de la chambre, disposées sensiblement perpendiculairement à l'axe longitudinal de ladite chambre.

12. Appareil de chauffage suivant l'une quelconque des revendications 4 à 11, caractérisé en ce qu'il comprend des moyens pour contr*oler la température des parois latérales de la chambre de combustion (5).

13. Appareil de chauffage suivant la revendication 12, caractérisé en ce que les moyens pour contr*oler la température des parois latérales de la chambre de combustion (5) sont constitués par une enveloppe (41) aménagée latéralement autour de la chambre de combustion, dans laquelle circule un fluide de refroidissement (42), cette enveloppe (41) ayant, sur au moins une partie importante de la périphérie de la chambre de combustion, une paroi commune avec cette dernière.

14. Appareil de chauffage suivant l'une quelconque des revendications 6 à 13, caractérisé en ce que le liquide primaire (14), dans sa zone d'échange de chaleur avec le fluide (24) à chauffer, contient des particules de matière solide (26) en fluidisation stable dans le courant de liquide (14), ces particules (26) permettant d'accroître l'échange de chaleur entre le liquide et le fluide, des grilles (15) retenant les particules dans la zone susdite.

15. Appareil de chauffage suivant la revendication 14, caractérisé en ce que les particules de matière solide (26) sont constituées par des granulés en matière plastique, des grains de sable, des billes de porcelaine ou de verre ou par des mélanges de ces matières.

16. Appareil de chauffage suivant l'une quelconque des revendications 4 à 15, caractérisé en ce que le liquide (14) destiné à constituer le mélange susdit avec les gaz de combustion (21) circule dans l'appareil en circuit fermé.

17. Appareil de chauffage suivant l'une quelconque des revendications 4 à 16, caractérisé en ce que le fluide secondaire précité circule en circuit fermé.

18. Appareil de chauffage suivant l'une quelconque des revendications 4 à 17, caractérisé en ce que le liquide (14) entrant dans la composition du mélange susdit et le fluide secondaire précité sont choisis dans le groupe comprenant l'eau et les solutions aqueuses minérales ou organiques.

19. Appareil de chauffage suivant l'une quelconque des revendications 4 à 18, caractérisé en ce que le liquide (14) et le fluide secondaire précités sont sous pression.

20. Appareil de chauffage suivant l'une quelconque des revendications 4 à 19, caractérisé en ce que le liquide (14) contient des substances capables de fixer des matières nocives, telles que soufre, cendres, etc....

**Claims**

1. Heating apparatus comprising an enclosure (1) having a burner (2) and a vertical combustion chamber (5) including at least one opening (23) lying in the lower portion thereof to let the combustion gases (21) out, the burner (2) comprising a combustive gas feed pipe (4) and a fuel feed pipe (3), co-axial with and of smaller cross-section than said latter one, leading to the combustion chamber (5), means for igniting the fuel-combustive gas mixture, means so arranged as to impart an annulus-like movement to the combustive gas-fuel mixture inside the combustion chamber (5), means (19) for mixing a primary fluid with those combustion gases (21) leaving the combustion chamber through opening (23), as well as means (16) for containing a secondary fluid and to allow after mixing the primary fluid with the combustion gases, a heat exchange between said primary fluid and said secundary fluid to be heated, said enclosure (1) being so arranged around the combustion chamber (5) as to enclose a major part at least of the primary fluid, characterized in that said apparatus comprises an injection head (6) mounted on the fuel feed pipe (3), said head (6) being provided with nozzles (7) so directed as to direct the fuel into the combustion chamber (5) along angles relative to the fuel feed pipe (3) axis lying between 15 and 90°, in that the means so arranged as to impart an annulus-like movement to the combustive gas-fuel mixture comprise a fixed screw (11) mounted on the fuel feed pipe (3) inside said combustive gas feed pipe (4), said screw (11) being arranged adjacent said injection head (6) and on a somewhat higher level than said head (6), to obtain a substantially uniform temperature inside the whole combustion chamber (5), and in that the means (19) for mixing a primary fluid with the combustion gases (21) leaving the combustion chamber (5) through the lower opening (23) comprise injection members to atomize said primary fluid in the combustion gases (21) to obtain said mixture, said injection members being arranged inside said enclosure (1) and lying above and outside the combustion chamber (5) to allow a heat exchange between the combustion gases (21) flowing out of the chamber and rising inside the enclosure, and the atomized primary fluid moving down inside the enclosure (1) over at least a major length of the chamber, and to allow an efficient cooling of the walls of combustion chamber (5), the enclosure (1) provided to collect the atomized primary fluid comprising an outlet opening (17) for said primary fluid as well as an overflow (8) retaining the primary fluid inside the enclosure (1) to a constant level inside the lowermost portion thereof, some distance below the opening (23) from the combustion chamber (5).

2. Heating apparatus according to claim 1, characterized in that the combustion chamber (5) is cylinder-shaped, the diameter thereof being 1.6 to 6 times the diameter of the combustive gas feed pipe (4), the top portion of said combustion chamber (5) being of truncated-cone shape.

3. Heating apparatus according to either one of claims 1 and 2, characterized in that the burner (2) comprises means (10) for monitoring the flames from said burner, said means being arranged level with said combustible-fluid injection head (6).

4. Heating apparatus according to any one of claims 1 to 3, characterized in that the primary fluid is a liquid (14).

5. Heating apparatus according to claim 4, characterized in that the injection members comprise at least four atomizers (19) arranged about the combustive gas feed pipe (4), said atomizers (19) each being so arranged as to throw the liquid (14) on the burner (2), the combustion chamber (5) and in the combustion gases (21) rising inside the enclosure (1) in the shape of a cone (22) the axis of which lies susbtantially parallel to the lengthwise axis of the combustion chamber.

6. Heating apparatus according to either one of claims 4 and 5, characterized in that said means for containing the secundary fluid and allowing a heat exchange between said liquid (14) and said secundary fluid to be heated, are comprised of a coil (16) so arranged as to be completely immersed in that liquid (14) contained in the enclosure bottom portion, the secundary fluid (24) in the coil (16) flowing in counter-current to said liquid (14).

7. Heating apparatus according to either one of claims 4 and 5, characterized in that it comprises a chamber outside the enclosure (1), so arranged as to contain part of said liquid, communicating with the enclosure bottom portion, and in that said means for containing the secundary fluid and allowing a heat exchange between said liquid (14) and said secundary fluid to be heated are comprised of a coil (25) so arranged as to be completely immersed in the liquid (14) in the outer chamber, the secundary fluid (24) inside the coil (25) flowing in counter-current to said liquid (14).

8. Heating apparatus according to any one of claims 4 to 7, characterized in that it comprises means (17) for separating the residual solids of the combustion, from that liquid (14) contained in the bottom portion of the enclosure (1), said means being located outside same and downstream of the outlet for said liquid.

9. Heating apparatus according to claim 8, characterized in that the bottom of enclosure (1) is cone-shaped to make settling of the most-bulky residual solids easier.

10. Heating apparatus according to any one of claims 4 to 9, characterized in that means (40) are provided inside the combustion chamber (5) on the one hand to enhance the heat exchange between the combustion gases (21) and the walls of said chamber, and on the other hand to retain at least a major part of the molten residual materials originating from the combustion.

11. Heating apparatus according to claim 10, characterized in that the means provided for enhancing the heat exchange between the combustion gases (21) and the walls of said chamber (5) and to retain at least a major part of the molten residual materials originating from the combustion, are comprised of fins (40) regularly distributed over the chamber inner circumference, arranged susbtantially at right angle to the lengthwise axis of said chamber.

12. Heating apparatus according to any one of claims 4 to 11, characterized in that it comprises means for controlling the temperature of the side walls of the combustion chamber (5).

13. Heating apparatus according to claim 12, characterized in that the means for controlling the temperature of the side walls of the combustion chamber (5) are comprised of a casing (41) arranged sidewise about the combustion chamber, wherein a cooling liquid (42) flows, said casing (41) having at least over a major portion of the combustion chamber circumference, a common wall therewith.

14. Heating apparatus according to any one of claims 6 to 13, characterized in that the primary liquid (14), in the heat exchange zone thereof with the fluid (24) to be heated, contains solid particles (26) in stable fluidizing condition in the liquid stream (14), said particles (26) allowing to increase the heat exchange between the liquid and the fluid, screens (15) retaining the particles in said zone.

15. Heating apparatus according to claim 14, characterized in that the solid particles (26) are comprised of granulates from plastic material, sand grains, porcelain or glass marbles, or of mixtures of such materials.

16. Heating apparatus according to any one of claims 4 to 15, characterized in that the liquid (14) which will form said mixture with the combustion gases (21) flows in closed circuit inside the apparatus.

17. Heating apparatus according to any one of claims 4 to 16, characterized in that said secundary fluid flows in closed circuit.

18. Heating apparatus according to any one of claims 4 to 17, characterized in that the liquid (14) being part of the composition of said mixture and said secundary fluid are selected in the group comprising water and the inorganic or organic aqueous solutions.

19. Heating apparatus according to any one of claims 4 to 18, characterized in that said liquid (14) and secundary fluid are pressurized.

20. Heating apparatus according to any one of claims 4 to 19, characterized in that the liquid (14) contains substances able to bind noxious substances such as sulfur, ashes, etc....

### Patentansprüche

1. Heizapparat umfassend ein Gehäuse (1), das einen Brenner (2) und eine vertikale Brennkammer (5) einschließt, die mindestens eine an ihrem unteren Teil angeordnete Öffnung (23) für den Austritt der Brenngase (21) umfaßt, wobei der Brenner (2) eine Zuführungsleitung (4) für gasförmigen Zündstoff und eine damit koaxiale Brennstoff-Zufuhrleitung (3) geringeren Querschnitts als letztere, die zu der Brennkammer (5) führen, Mittel zum Zünden der Mischung aus Brennstoff und gasförmigem Zündstoff, Mittel, die angeordnet sind, um eine torische (ringförmige) Bewegung der Mischung aus gasförmigem Zündstoff und Brennstoff im Inneren der Brennkammer (5) hervorzurufen, Mittel (19) zur Verwirklichung der Mischung eines Primärfluids mit den die Brennkammer durch die Öffnung (23) verlassenden Brenngasen (21) sowie Mittel (16) Zur Aufnahme eines Sekundärfluids und, nach Mischung des Primärfluids mit den Brenngasen, zur Erzielung eines Wärmeaustauschs zwischen besagtem Primärfluid und besagtem, zu erwärmendem Sekundärfluid umfaßt, wobei besagtes Gehäuse (1) um die Brennkammer (5) zur Aufnahme mindestens eines wesentlichen Teiles des Primärfluids angeordnet ist, dadurch gekennzeichnet, daß der Apparat einen auf der Brennstoff-Zufuhrleitung (3) angeordneten Einspritzkopf (6) umfaßt, der mit Düsen (7) versehen ist, die zur Einleitung des Brennstoffes in die Brennkammer (5) unter Winkeln relativ zur Achse der Brennstoff-Zuführleitung (3) ausgerichtet sind, die zwischen 15 und 90° liegen, daß die Mittel zum Hervorrufen einer torischen Bewegung der Mischung aus gasförmigem Zündstoff und Brennstoff eine feste, auf der Brennstoff-Zufuhrleitung (3) im Inneren der vorerwähnten Zuführungsleitung (4) für gasförmigen Zündstoff angeordnete Schnecke oder Schraube umfassen, die in der Nähe des erwähnten Einspritzkopfes (6) und in einer Ebene etwas oberhalb von diesem derart angeordnet ist, daß eine im wesentlichen gleichförmige Temperatur in der ganzen Brennkammer (5) erzielbar ist, und daß die die Erzeugung der Mischung aus einem Primarfluid mit den die Brennkammer (5) durch die untere Öffnung (23) verlassenden Brenngasen (21) ermöglichenden Mittel (19) Einspritzelemente zum Zerstäuben dieses Primärfluids in den Brenngasen (21) zwecks Erzeugung jener Mischung umfassen, wobei die Einspritzelemente sich im Inneren des vorerwähnten Gehäuses (1) befinden und oberhalb sowie außerhalb der Brennkammer (5) derart angeordnet sind, daß sie einen Wärmeaustausch zwischen den aus der Kammer austretenden Brenngasen (21), die in dem Gehäuse (1) aufsteigen, und dem zerstäubten, in dem Gehäuse (1) absteigenden Primärfluid auf mindestens einer wesentlichen Länge der Kammer und eine wirksame Abkühlung der Wandungen der Brennkammer (5) ermöglichen, wobei das zur Rückgewinnung des zerstäubten Primärfluids ausgebildete Gehäuse eine Austrittsöffnung (17) besagren Primärfluids ebenso wie einen Überlauf (8) umfaßt, der das Primärfluid des Gehäuses (1) auf konstantem Niveau im unteren Teil derselben in einem bestimmten Abstand unterhalb der Öffnung (23) der Brennkammer (5) hält.

2. Heizapparat nach Ansprunch 1, dadurch gekennzeichnet, daß die Brennkammer (5) zylinderförmig ist, wobei ihr Durchmesser 1,6 bis 6 mal größer als der Durchmesser der Zuführungsleitung (4) für gasförmigen Zündstoff ist und der obere Teil besagter Brennkammer (5) die Form eines Kegelstumpfes aufweist.

3. Heizapparat nach einem der Ansprüche 1 und 2, dadurch gekennzeichnet, daß der Brenner (2) Überwachungsmittel für die aus dem Brenner austretenden Flammen aufweist, wobei diese Mittel in der Höhe des Einspritzkopfes (6) des vorerwähnten Brennstofffluids angeordnet sind.

4. Heizapparat nach einem der Ansprüche 1 bis 3, dadurch gekennzeichnet, daß das Primärfiuid eine Flüssigkeit (14) ist.

5. Heizapparat nach Anspruch 4, dadurch gekennzeichnet, daß die Einspritzelemente mindestens vier um die Zuführungsleitung (4) des gasförmigen Zündstoffes angeordnete Zerstäuber (19) umfassen, die jeweils zum Zersprühen der Flüssigkeit (14) auf den Brenner (2), auf die Brennkammer (5) und in die in dem Gehäuse (1) aufsteigenden Brenngase (21) gemäß einem Kegel (22) angeordnet sind, dessen Achse sich im wesentlichen parallel zur Längsachse der Brennkammer befindet.

6. Heizapparat nach Anspruch 4 oder 5, dadurch gekennzeichnet, daß die vorerwähnten Mittel zur Aufnahme des Sekundärfluids und zur Erzielung eines Wärmeaustauschs zwischen besagter Flüssigkeit (14) und besagtem, zu erwärmendem Sedundärfluid von einer Leitungsschlange (16) gebildet sind, die derart angeordnet ist, daß sie gänzlich in die im unteren Teil des Gehäuses enthaltene Flüssigkeit (14) eingetaucht ist, wobei das Sekundärfluid (24) in der Schlange (16) im Gegenstrom zu der Flüssigkeit (14) fließt.

7. Heizapparat gemäß Anspruch 4 oder 5, dadurch gekennzeichnet, daß sie eine außerhalb des Gehäuses (1) zur Aufnahme eines Teils der erwähnten Flüssigkeit angeordnete Kammer umfaßt, die mit dem unteren Teil des Gehäuses in Verbindung steht, und daß die vorerwähnten Mittel zur Aufnahme des Sekundärfluids und zum Ermöglichen eines Wärmeaustauschs zwischen besagter Flüssigkeit (14) und besagtem, zu erwärmendem Sekundärfluid von einer Rohrschlange (25) gebildet sind, die derart angeordnet ist, daß sie ganz in der Flüssigkeit (14) in der äußeren Kammer eingetaucht ist, wobei das Sekundärfluid im Gegenstrom zu besagter Flüssigkeit (14) fließt.

8. Heizapparat nach einem der Ansprüche 4 bis 7, daduich gekennzeichnet, daß sie Mittel (17) zum Trennen von rückständigen, aus der Verbrennung resultierenden Feststoffen von der in dem unteren Teil des Gehäuses (1) enthaltenen Flüssigkeit (14) aufweist, wobei diese Mittel außerhalb des Gehäuses und in Strömungsrichtung hinter der Austrittsöffnung besagter Flüssigkeit angeordnet sind.

9. Heizapparat nach Anspruch 8, dadurch gekennzeichnet, daß der Boden des Gehäuses (1) kegelförmig ist, um die Ablagerung rückständiger, voluminösester Feststoffe zu erleichtern.

10. Heizapparat nach einem der Anspruche 4 bis 9, dadurch gekennzeichnet, daß in der Brennkammer (5) Mittel (40) vorgesehen sind, die einerseits den Wärmeaustausch zwischen den Brenngasen (21) und den Wandungen besagter Kammer begünstigen und andererseits mindestens einen wesentlichen Teil der von der Verbrennung resultierenden rückständigen verschmolzenen (stückigen) Stoffe zurückhalten.

11. Heizapparat nach Anspruch 10, dadurch gekennzeichnet, daß die zur Begünstigung des Wärmeaustausches zwischen den Brenngasen (21) und den Wandungen besagter Kammer (5) und zum Zurückhalten wenigstens eines wesentlichen Teils der durch die Verbrennung entstandenen ruckständigen verschmolzenen (stückigen) Stoffe vorgesehenen Mittel durch Flügel gebildet sind, die auf der inneren Oberfläche der Kammer gleichmäßig verteilt und im wesentlichen senkrecht zur Längsachse besagter Kammer angeordnet sind.

12. Heizapparat nach einem der Ansprüche 4 bis 11, dadurch gekennzeichnet, daß sie Mittel zur Temperaturüberwachung der Seitenwände der Brennkammer (5) umfaßt.

13. Heizapparat nach Anspruch 12, dadurch gekennzeichnet, daß die Temperaturüberwachungsmittel für die Seitenwände der Brennkammer (5) von einem Mantel (41) gebildet sind, der seitlich um die Brennkammer angeordnet ist und in dem ein Kühlfluid (42) zirkuliert, wobei dieser Mantel (41) auf mindestens einem wesentlichen Teil des Umfanges der Brennkammer eine mit letzterer gemeinsame Wandung aufweist.

14. Heizapparat nach einem der Ansprüche 6 bis 13, daddurch gekennzeichnet, daß die Primärflüssigkeit (14) in ihrer Wärmeaustauschzone mit dem zu erwärmenden Fluid (24) Feststoff-Partikel (26) in stabiler Verflüssigung (Lösung, Emulsion) in dem Strom der Flüssigkeit (14) enthält, wobei diese Partikel (26) eine Steigerung des Wärmeaustausches zwischen der Flüssigkeit und dem Fluid ermöglichen und Gitter die Partikel in besagter Zone halten.

15. Heizapparat nach Anspruch 14, dadurch gekennzeichnet, daß die Feststoff-Partikel (26) aus Kunststoff-Granulat, Sandkornern, Kügelchen aus Porzellan oder Glas oder aus Mischungen dieser Materialien bestehen.

16. Heizapparat nach einem der Ansprüche 4 bis 15, dadurch gekennzeichnet, daß die zur Bildung der erwähnten Mischung mit den Brenngasen (21) bestimmte Flüssigkeit (14) in der Vorrichtung in geschlossenem Kreislauf zirkuliert.

17. Heizapparat nach einem der Ansprüche 4 bis 16, dadurch gekennzeichnet, daß das vorerwähnte Sekundärfluid in geschlossenem Kreislauf zirkuliert.

18. Heizapparat nach einem der Ansprüche 4 bis 17, dadurch gekennzeichnet, daß die in die Zusammensetzung der erwähnten Mischung eintretende Flüssigkeit (14) und das vorerwähnte Sekundärfluid aus der Gruppe gewählt sind, die Wasser und wäßrige Lösungen von Mineralien oder organischen Stoffen umfaßt.

19. Heizapparat nach einem der Ansprüche 4 bis 18, dadurch gekennzeichnet, daß die Flüssigkeit (14) und das vorerwähnte Sekundärfluid unter Druck stehen.

20. Heizapparat nach einem der Ansprüche 4 bis 19, dadurch gekennzeichnet, daß die Flüssigkeit (14) Stoffe enthält, die schädliche Materialien wie Schwefel, Asche etc. festhalten.

FIG. 1

FIG.2.